## Europäisches Patentamt
## European Patent Office
## Office européen des brevets

(11) Publication number: **0 069 717**
**B 1**

(12)

# EUROPEAN PATENT SPECIFICATION

(45) Date of publication of patent specification: **18.09.85**

(21) Application number: **82850144.5**

(22) Date of filing: **23.06.82**

(51) Int. Cl.⁴: **F 02 B 69/04,** F 02 D 19/10, F 17 C 9/04, B 63 B 25/12, B 63 J 5/00

(54) **Method for utilizing boil-off gas from cryogenic liquids as fuel in a dual gas/oil-burning diesel engine, and a system for utilizing the method.**

(30) Priority: **08.07.81 NO 812328**

(43) Date of publication of application:
**12.01.83 Bulletin 83/02**

(45) Publication of the grant of the patent:
**18.09.85 Bulletin 85/38**

(84) Designated Contracting States:
**BE CH DE FR GB IT LI NL SE**

(56) References cited:
**DE-A-3 026 097**
**GB-A-1 440 318**

**SHIPBUILDING AND SHIPPING RECORD, vol. 113, 30th May 1969, pages 742-744, W. KLAUNIG: "Dual-fuel engines for the propulsion of LNG tankers"**

(73) Proprietor: **Moss Rosenberg Verft A/S**
**Postboks 1053 Jeloy**
**N-1501 Moss (NO)**

(72) Inventor: **Kvamsdal, Rolf**
**Stjernevn. 1**
**N-1500 Moss (NO)**

(74) Representative: **Axelsson, Rolf et al**
**Kransell & Wennborg AB Sandhamnsgatan 42**
**S-115 28 Stockholm (SE)**

## Description

The invention relates to a method for utilizing compressed boil-off gas from cryogenic liquids as fuel in a dual gas/oil-burning diesel engine on board an oceangoing vessel, and to a system for supplying boil-off gas from a cryogenic liquid as fuel to a dual gas/oil-burning diesel engine on board a ship.

The invention has been especially developed in connection with so-called LNG carriers, i.e., ships which carry natural gas in liquefied form, hereafter termed cryogenic liquid. Gas carriers and especially LNG carriers have a special problem in that heat leaks to the cargo tanks cause the formation of so-called boil-off, i.e., a certain quantity of gas is produced which must be taken care off, either by recondensation or by combustion, or alternately by utilizing the gas as fuel for propulsion and auxiliary machinery.

With respect to the use of boil-off as fuel on board LNG carriers, the solution most frequently utilized has been to combust the boil-off gas in connection with steam turbine machinery, i.e., as supplementary fuel for the ship boilers, which also burn heavy oil. Operating experience is good with such machinery, but the level of efficiency and bunker fuel consumption are not satisfactory.

The desire to optimize the fuel economy of propulsion machinery on LNG carriers has focused interest on slow-running ("large-bore") diesel engines. These exhibit very good thermal efficiency, while at the same time they are able to run on poor (inexpensive) quality bunker oil. In connection with the disposal of boil-off from cryogenic liquids in the ship's cargo tanks, the diesel engine alternative immediately presents itself as a very attractive option. At the outset, it would obviously be advantageous if there existed a dual gas/oil-burning diesel engine which could burn gas/heavy oil under any conditions whatsoever and with the same high efficiency over the entire relevant operating spectrum. Such an option would be especially attractive for existing ships where the quantity of boil-off gas produced is high, so that the use of a condensation plant would be disproportionately expensive.

Pure gas-fueled engines are available today for lower and average output power ranges, i.e., up to some thousand kW. A marine installation also exists which has a slow-running, dual gas/oil-burning diesel engine with an output power of about 15,000 kW.

In all of these types of engines, the gas is introduced into the combustion chambers or cylinders at moderate pressure immediately after the compression stroke commences. The gas/air mixture is ignited by spark plugs or "pilot" fuel, i.e., a small amount of diesel oil is injected at the moment when combustion is desired. One thereby obtains an almost instantaneous combustion with an accompanying high rise in pressure (the Otto process). Consequently, the amount of gas must be restricted, which in turn results in a reduction of efficiency and a limited capability for combusting gas. In the case of the above-mentioned slow-running (large-bore) diesel engine, the proportion of gas must be held below about 55% of the total fuel requirement at full output power. This means that for larger vessels with large quantities of boil-off, no such suitable dual gas/oil-burning engines exist which can combust all the boil-off gas with sufficient margin and the desirable efficiency.

There thus exists a need for a dual gas/oil-burning diesel engine which in part can run on pure heavy oil, in part on a high percentage of gas, without unpermissible rises in pressure being produced during combustion. In accordance with the invention, boil-off can be utilized in a dual gas/oil-burning diesel engine under these conditions provided that the boil-off gas is supplied in a controlled manner to the combustion chamber during combustion itself, i.e., one obtains, at any rate approximately, a diesel process.

In an article of W. Klaunig: "Dual-fuel engines for the propulsion of LNG-tankers", Shipbuilding and Shipping Record, vol. 113, May 30, 1969, pages 742—744, a medium speed dual fuel engine is disclosed. The arrangement for delivery of evaporated natural gas to the engine includes a compressor delivering to an expansion tank. No precautions, however, are taken to insure a controlled supply of boil-off gas to the combustion chamber of the engine during combustion itself.

According to the invention, therefore, a method for utilizing compressed boil-off gas from cryogenic liquids as fuel in a dual gas/oil-burning diesel engine on board a vessel is provided, which is characterized in that the compressed boil-off gas is introduced into the combustion chamber of the engine during combustion by high pressure injection which is controlled in accordance with the combustion pressure desired revolutions per minute and output power. Preferably, the high-pressure injection is controlled electronically or electronically/hydraulically.

The technology necessary for carrying out the method is known per se, since experiments have been and continue to be performed with electronically-controlled fuel valves for oil. Also available on the market are diesel engines for special purposes with electronically-controlled delivery of liquid fuel. However, whereas cam-driven fuel pumps can be constructed so that liquid fuel will be injected into the cylinders approximately in sequence with the course of combustion, it is not possible simply to apply this solution for a compressible substance, such as gas is. For both types of fuel, electronic control of the fuel supply provides the best possibilities for monitoring and adjusting the injection in a favorable manner as combustion proceeds.

The invention also provides a system for supplying boil-off gas from a cryogenic liquid as fuel to a dual gas/oil-burning diesel engine on board a vessel, comprising a gas compressor whose suction side is connected to the storage tank containing the cryogenic liquid, a buffer storage tank which receives compressed gas from the compressor, the system being characterized in that it is further provided with a conduit from the buffer tank to a gas injection valve in the engine combustion chamber, and with a control means for opening and closing the gas injection valve in accordance with the instantaneous pressure in the associated engine combustion chamber. In practice, one can utilize a data processor for administering the most important control impulses, which will be the instantaneous pressure in the cylinder, the revolutions per minute, the desired output power, and the crank position.

Especially advantageous is a system in which the gas compressor and the buffer storage tank are arranged in the vessel's cargo tank area, since one thereby reduces the safety risks in the vessel's engine room.

The dual oil/gas-burning diesel engine utilized will have two fuel-supply systems in each cylinder, and each of these is designed for 100% power output. When the engine is running on gas, the gas must be ignited, for example with the aid of pilot fuel, but spark plugs could also be used. Oil/gas in arbitrary ratios can be combusted, and it will normally be preferable to provide reciprocal control so that all the gas available will be combusted at all times with liquid fuel added to whatever degree is necessary. If the output power requirement is so low that there will be excess gas available, the excess can suitably be stored by permitting a build-up of pressure in the cargo tank or tanks. Spherical tanks are especially well-suited in this connection, because they can withstand a certain degree of pressure build-up. This capability may best be utilized if a small amount of gas can be continuously bled off, so as to avoid a rapid rise in pressure of non-condensable gas (nitrogen). It will thus be advantageous to arrange a high pressure storage facility in connection with the buffer storage tank, for example in the form of a battery of gas cylinders. The buffer storage tank may in that case constitute one of the tanks in the battery. Within the limits set by economic and practical considerations, the capacity of the tank battery can be chosen such that the entire amount of boil-off can be allowed to accumulate over a period of several days. When the gas is to be utilized, it is led to a suitable stage in the compressor, which in that case is made as a multi-stage compressor, this being a favorable solution per se, since the compressor stage may then be selected depending on the pressure at any given time.

Another way of disposing of boil-off, for instance when the ship is lying up close to land, might be to disconnect the diesel engine from the screw and connect it to a water brake. It might also be practical to utilize a shaft generator, because one can then provide the necessary current requirements by means of especially efficient machinery. In harbor, the screw can be disconnected. The diesel engine must then run on partial loading, but when the fuel is mostly gas, carbonization and other typical problems can better be held under control.

The invention will be explained in greater detail in the following with reference to the accompanying drawings, wherein:

Figure 1 shows a schematic drawing of a system in accordance with the invention, and

Figures 2 and 3 show modified compressor and storage assemblies in accordance with the invention.

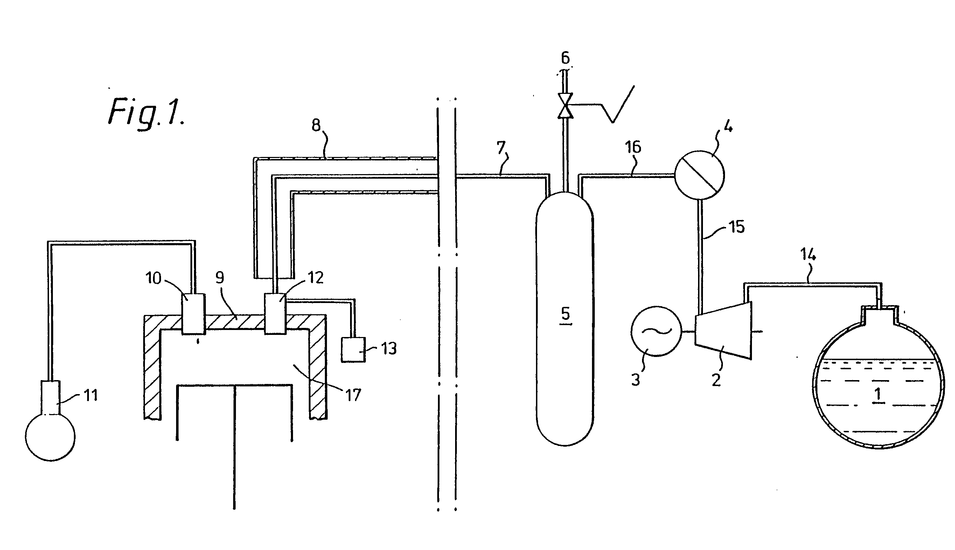

In Figure 1, the cargo tank (spherical tank) on board a vessel is designated by numeral 1. The boil-off is drawn off at the top of the tank and guided through a line 14 to a compressor 2 which is driven by an electric motor 3. From the pressure side of the compressor 2, a line 15 leads to an after-cooler 4, and from the latter a line 16 leads to a buffer storage tank 5. The buffer storage tank has safety valves 6. From the buffer storage tank 5, a gas line 7 leads to a gas injection valve 12 which is connected to the illustrated diesel engine cylinder 9 and which is opened and closed by means of a control means 13, indicated only schematically in the drawing, which is influenced by the instantaneous pressure in the engine combustion chamber 17, the revolutions per minute, the desired output power and the crank position.

The cylinder 9 also has a fuel valve 10 for ordinary diesel fuel, connected to a fuel pump 11.

As shown in the drawing, the line 7 from the buffer storage tank 5 passes through a protective pipe 8 inside the engine room, in accordance with the safety requirements governing gas lines in the engine room of a vessel. The compressor 2 and the storage tank 5, as illustrated, are placed in the cargo tank area, which reduces the safety risks in the engine room.

The compressor may advantageously be a multi-stage compressor with intermediate cooling, and it compresses boil-off gas from the cargo tank 1 to a suitable pressure, on an order of magnitude of 200 bar. A pressure of this order of magnitude at the valve 12 is desirable because one will then alway have sufficient margin to the highest combustion pressure.

With the high-pressure gas injection system shown in Figure 1, one can carry out the method of the invention, with controlled high-pressure gas injection provided individually for each engine cylinder.

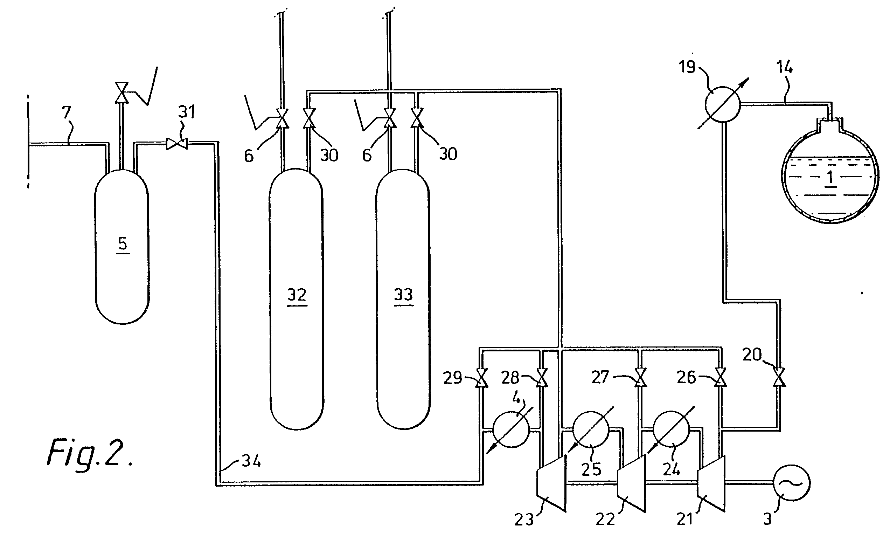

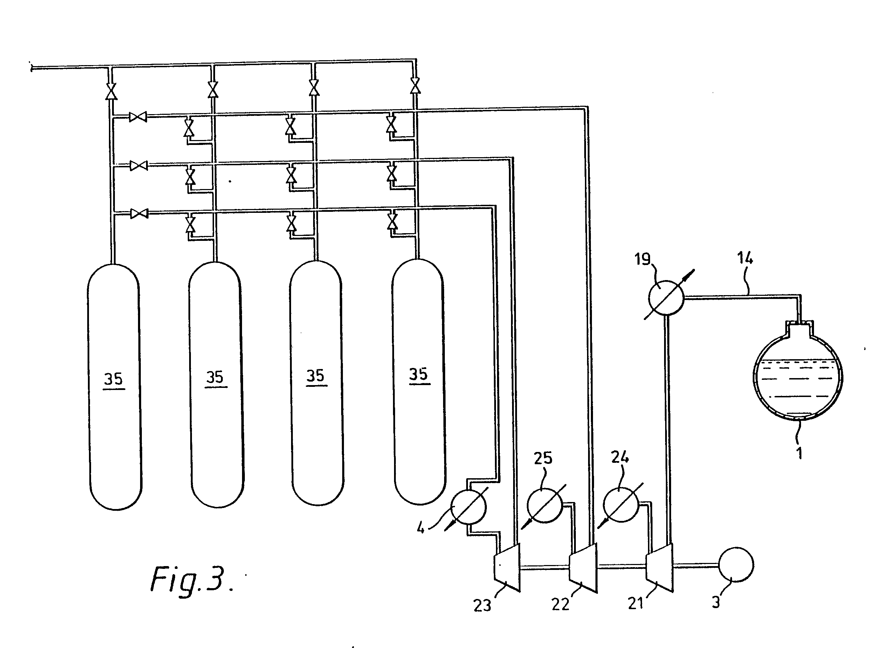

Figures 2 and 3 show modified compressor and storage assemblies, wherein the same reference numerals are utilized for components corresponding to those shown in Figure 1.

The assembly in Figure 2 is a somewhat more sophisticated compressor and storage tank arrangement. Three-stage compression with compressors 21, 22 and 23 is utilized. Storage tanks which can be operated at pressure levels between zero and up to the maximum delivery pressure of the compressor are used. A similar arrangement could obviously be used for more or for fewer (minimum 2) compressor stages.

In Figure 2, a heat exchanger 19 has been introduced upstream of the compressors. This heat exchanger is utilized for optional heating of gases prior to compression. Some types of compressors cannot accept gas which is too cold.

The intermediate coolers are designated by numerals 24 and 25. The necessary valves are designated by numerals 20, 26, 27, 28, 29, 30 and 31, in addition to the valves 6.

The illustrated tanks 32 and 33 can be single tanks or groups of tanks. The purpose of the arrangement shown in Figure 2 is to obtain a best possible utilization of the tank storage capacity (for accumulation of boil-off when machinery needs are low), and to minimize the compressor work. In order to have the greatest possible readiness capacity for storage of boil-off, the pressure in the tanks 32, 33 must be as low as possible at the outset. The boil-off gas is compressed via first compressor stage 21, cooler 24 and valve 27 to the storage tanks. It should be noted that cut-off valves which may be required at the inlet and outlet of the various compressor stages are not illustrated. When the backpressure has become too great, the next stage is activated by closing the valve 27 and opening the valve 28, etc.

When gas is to be used in the machinery, it may happen that the pressure in the storage tanks is so high that compression is not required. For a period of time, in that case, the gas is led via valve 29 and line 34, etc., to the engine room. If the pressure becomes too low, the gas is first led to the last compressor stage 23 via valve 28, and as required an increasing number of the stages are put to use. The arrangement also provides the possibility of storing part of the gas and using the remainder in the machinery, excess gas being drawn off at suitable intermediate stages or following the last stage, depending on the instantaneous pressure in the storage tank.

It should also be mentioned that a more detailed study will indicate the optimum number of compressor stages and the design pressure for the storage tanks. It is not certain that it pays off to dimension these for maximum pressure from the last compressor stage.

Figure 3 shows an arrangement in which the storage tanks 35 are divided up so that several pressure stages can be utilized simultaneously for storage. Otherwise, the same reference numerals as in Figure 2 are used.

## Claims

1. A method of utilising compressed boil-off gas from cryogenic liquids as fuel in a dual gas/oil-burning diesel engine on board a vessel, characterised in that the compressed boil-off gas is introduced into the combustion chamber of the engine during combustion by high pressure injection which is controlled in accordance with the combustion pressure, desired revolutions per minute and output power.

2. A method according to claim 1, characterised in that the high pressure injection is controlled electronically.

3. A system for supplying boil-off gas from a cryogenic liquid as fuel to a dual gas/oil-burning diesel engine on board a vessel, comprising a gas compressor (2) whose suction side is connected to the storage tank (1) containing the cryogenic liquid, a buffer storage tank (5) which receives compressed gas from the compressor (2), characterised in that the system is further provided with a conduit (7) from the buffer storage tank (5) to a gas injection valve (12) in the engine combustion chamber (17), and with control means (13) for opening and closing the gas injection valve (12) in accordance with the instantaneous pressure in the associated engine combustion chamber (17).

4. A system according to claim 3, characterised in that the gas compressor (2) and the buffer storage tank (5) are disposed in the cargo tank area of the vessel.

## Patentansprüche

1. Verfahren zur Ausnutzung eines verdichteten Verdampfungsgases von Tieftemperaturflüssigkeiten als Betriebsstoff in einer zur Gas/Öl-Verbrennung geeigneten Zweistoff-Dieselmaschine an Bord eines Schiffes, dadurch gekennzeichnet, daß das verdichtete Verdampfungsgas in die Brennkammer der Maschine während der Verbrennung mittels Hochdruckinjektion, die in einer Abhängigkeit von dem Verbrennungsdruck, der erwünschten Umdrehungszahl pro Minute und der Ausgangsleistung gesteuert wird, eingeführt wird.

2. Verfahren nach Anspruch 1, dadurch gekennzeichnet, daß die Hochdruckinjektion elektronisch gesteuert wird.

3. System zum Zuführen eines Verdampfungsgases einer Tieftemperaturflüssigkeit als Betriebsstoff an eine zur Gas/Öl-Verbrennung geeignete Zweistoff-Dieselmaschine an Bord eines Schiffes, mit
— einem Gas-Verdichter, dessen Saugseite an einen die Tieftemperaturflüssigkeit enthaltenden Vorratstank angeschlossen ist, und
— einem Puffer-Vorratstank zum Aufnehmen des durch den Verdichter komprimierten Gases, gekennzeichnet durch
— eine Leitung (7) von dem Puffer-Vorratstank (5) zu einem Gas-Injektionsventil (12) an der Brennkammer (17) der Maschine und
— eine Steuereinrichtung (13) zum Öffnen und Schließen des Gas-Injektionsventils (12) in einer Abhängigkeit von dem augenblicklichen Druck in der zugeordneten Brennkammer (17).

4. System nach Anspruch 3, dadurch gekennzeichnet, daß der Gas-Verdichter (2) und der Puffer-Vorratstank (5) in dem Ladungstank-Bereich des Schiffes angeordnet sind.

## Revendications

1. Procédé pour utiliser un gaz d'ébullition comprimé provenant de liquides cryogèniques en tant que combustible dans un moteur diesel mixte brûlant du gaz et de l'huile à bord d'un navire, caractérisé en ce que le gaz d'ébullition comprimé est introduit dans la chambre de combustion du moteur pendant la combustion par une injection sous haute pression qui est commandée en fonction de la pression de combustion, du nombre de tours désiré par minute et de la puissance de sortie.

2. Procédé suivant la revendication 1, caractérisé en ce que l'injection sous haute pression est commandée par voie électronique.

3. Système pour distribuer un gaz d'ébullition provenant d'un liquide cryogènique en tant que combustible à un moteur diesel mixte brûlant du gaz et de l'huile à bord d'un navire, comprenant un compresseur à gaz (2) dont le côté aspiration est relie à un réservoir d'emmagasinage (1) contenant le liquide cryogènique, un réservoir tampon (5) d'emmagasinage qui reçoit du gaz comprimé provenant du compresseur (2), caractérisé en ce que le système comporte en outre une conduite (7) conduisant du réservoir tampon (5) d'emmagasinage à une vanne (12) d'injection de gaz dans la chambre de combustion du moteur, et un dispositif de commande (13) pour ouvrir et fermer la vanne (12) d'injection de gaz en concordance avec la pression instantanée dans la chambre de combustion (17) du moteur associé.

4. Système suivant la revendication 3, caractérisé en ce que le compresseur à gaz (2) et le réservoir tampon (5) d'emmagasinage sont disposés dans la zône de la citerne de cargaison du navire.

Fig.1.

0 069 717

Fig.2.

0 069 717

Fig.3.